# EUROPÄISCHE PATENTSCHRIFT

(11) **EP 2 476 493 B1**
(45) Veröffentlichungstag und Bekanntmachung des Hinweises auf die Patenterteilung: **09.07.2014**
(21) Anmeldenummer: 12405006.3
(22) Anmeldetag: 11.01.2012
(51) Int. Cl.: B09B 5/00, B09B 3/00

(54) **Verfahren und Vorrichtung zum Rezyklieren hermetisch gekapselter Alternativ-Kompressoren von Kühlschränken**
Method and device for recycling hermetically capsuled alternative compressors of refrigerators
Procédé et dispositif de recyclage de compresseurs alternatifs encapsulés hermétiques de réfrigérateurs

(30) Priorität: 17.01.2011 CH 82112011
(43) Veröffentlichungstag der Anmeldung: 18.07.2012
(73) Patentinhaber: Albatech Swiss Tecnology SA, 1897 Bouveret (CH)
(72) Erfinder: Chiaro, Riccardo, 10014 Caluso (TO) (IT)
(74) Vertreter: Biazzi, Riccardo

(56) Entgegenhaltungen:
- DE-A1- 3 911 420
- DE-A1- 4 000 172
- US-A1- 2006 200 964
- US-B1- 6 732 416

## Beschreibung

Die vorliegende Erfindung betrifft ein Verfahren zum Rezyklieren hermetisch gekapselter Alternativ-Kompressoreinheiten (Kolbenkompressoren) von Kühlschränken kleiner und mittlerer Leistung. Solche Verfahren sind z.B. in den Dokumente US 2006/200964 und US-B1-6732416 beschrieben.

Das Problem des Rezyklierens hermetisch geschlossener Alternativ-Kompressoreinheiten aus Kühlschränken kleiner und mittlerer Leistung, also Kühlschränken, wie sie heute in jedem Haushalt stehen, ist in letzter Zeit immer wichtiger geworden, in Anbetracht der sehr grossen Zahl von Kühlschränken, die weltweit ausser Betrieb genommen werden, sowie der Tatsache, dass in jedem hermetisch gekapselten Kompressor eine gewisse Restmenge umweltgefährdender Kühlmittelflüssigkeit verbleibt, die in möglichst rationeller Weise und ohne Verluste zu entsorgen ist. Natürlich ist auch das Wiedergewinnen der in der Kompressoreinheit vorhandenen Materialien (Eisen, Gussteile, Kupfer, Legierungen, usw.) wichtig und sollte möglichst rationell durchgeführt werden.

Hier ist präzisierend zu unterstreichen, dass sich die vorliegende Erfindung nur auf einen einzigen Typus der drei Typen von Alternativ-Kompressoren bezieht, die sich unterteilen in hermetisch gekapselte Kompressoren, halb-hermetisch gekapselte (bzw. zugängliche hermetische Kompressoren) und offene Kompressoren.

Bei den beiden letztgenannten Typen ist der Zugang zum Inneren durch Deckel und verschraubten Kopfplatten möglich, so dass das Rezyklieren einfacher erfolgen kann als bei den hermetisch gekapselten Kompressoren. Im Folgenden ist eine umfassende Definition der hermetisch gekapselten Kompressoren gegeben, auf welche sich die vorliegende Erfindung bezieht:
"Hermetisch gekapselte Kompressoren bestehen aus einem einzigen Block einschliesslich des Elektromotors und sind in einer dichten Hülle eingeschlossen, deren Innenraum mit Dampf der Kühlmittelflüssigkeit gefüllt ist. Kompressoren diese Typs werden typischerweise in Kühlsystemen mit minimaler Kühlleistung eingesetzt, beispielsweise im Haushaltkühlschrank, doch fehlen Anwendungen bei mittleren Kühlleistungen (bis zu 10 - 15 kW elektrische Leistung durchaus nicht) ...".

Der Vorteil des hermetisch gekapselten Alternativ-Kompressors ist im Vergleich zu den andern Typen darin zu sehen, dass er keinen Kühlmittel-Verlusten unterworfen ist.

Gemäss dem gegenwärtigen Stand der Technik erfolgt das industrielle Rezyklieren hermetisch gekapselter Alternativ-Kompressoren in den folgenden Arbeitsphasen
- Abtrennen der Kompressoreinheit vom Gehäuse des Kühlschrankes unter Abtrennen des Kühlmittelkreislaufs, der nunmehr kein Kühlmittel-Gas mehr enthält,
- Behandlung der Kompressoren in geeigneten Anlagen zum Wiedergewinnen der metallischen Materialien, in welchen die Kompressoren zerkleinert werden, damit das Gewinnen der Inhalts-Materialien erfolgen kann, die zu speziellen Eisen- und metallurgischen Betrieben geschickt werden sollen, wonach das zerkleinerte Material weiter in Teilchen zertrümmert wird, die sich besser zum Separieren eignen.

Dieses bekannte System des Rezyklierens weist noch verschiedene ökologische und ökonomische Nachteile auf, die in folgender Art und Weise behoben werden können:
- die Kompressoren enthalten in ihrem Inneren noch eine beachtliche Menge der Ölemulsion mit den Ozon - schädigenden CFC und HCFC. (Fluor-Kohlenstoffe und Fluorkohlenwasserstoffe).

Mit der Zertrümmerung kontaminiert diese Ölemulsion das zerkleinerte Produkt, was eine grössere Verunreinigung in folgender Form bewirkt:
- Emission von Substanzen, die das Klima infolge des bekannten Treibhauseffektes verändernden,
- Ozon - schädigende Emissionen, die das gefürchtete Ozonloch hervorrufen.

Überdies ist der Zertrümmerungsprozess teuer, da er komplizierte Maschineneinrichtungen erfordert, wobei sich die Kosten weiter erhöhen wegen der Notwendigkeit, dass die Pulver bzw. Granulate aus den verschiedenen Bearbeitungsschritten niedergeschlagen und veredelt werden müssen.

Obschon sich die vorliegende Erfindung grundsätzlich mit den Systemen befasst, die zum Entfernen der in den Kompressoren verbliebenen Ölemulsionen verwendet werden, ist hier detaillierter zu präzisieren, wie diese heute verwendeten Systeme arbeiten, um zu versuchen, das genannte Problem zu lösen. Zwei Systeme werden angewendet:
Das erste System besteht darin, die Ölemulsionen aus den abgetrennten Kupferröhrchen zu treiben, die den Kompressor mit dem Kühlerteil verbinden, und weist die folgenden Nachteile auf:
   - die Notwendigkeit, dass je nach Kompressormodell in Form und Abmessungen geeignete Einspannrahmen gebaut werden müssen, die den Kompressor in der für das Entleeren richtigen Schräglage halten,
   - die Notwendigkeit, dicht schliessende Gefässe zur Aufnahme der Ölemulsionen zur Verfügung zu haben,
   - die Notwendigkeit, das Abtrennen der Kupferröhrchen auszuführen, ohne sie zu quetschen, oder besser ausgedrückt, ohne die Ausflussöffnung für die Ölemulsionen zu verstopfen oder zu versperren; normalerweise werden die Röhrchen zur Beschleunigung der Operation einfach abgeschnitten, und das Abfliessen dauert sehr lange,
   - die inneren Teile enthalten noch weiter Ölemulsion, und zum vollständigen Entleeren sind verschiedene Umdreh- oder Kippvorgänge auszuführen, Wartezeiten und nachheriges Zurückdrehen sind nötig für das Entleeren der Restflüssigkeit.

Dieses Vorgehen erfolgt manuell, beansprucht viel Zeit und ist somit kostspielig, und eignet sich schlecht für eine industrielle Bearbeitung.

Das zweite, heute angewendete System besteht darin, ein Loch in die Umhüllung des Kompressors zu schlagen, was folgende Nachteile mit sich bringt:
- Die Notwendigkeit, die Operation von Hand auszuführen,
- die Notwendigkeit, je nach dem Kompressormodell geeignete EinspannRahmen bereitzuhalten, in denen der Kompressor zum Entleeren gelagert werden kann,
- die Notwendigkeit, dichte Gefässe zum Sammeln der Ölemulsion bereitzustellen,
- die Notwendigkeit, nacheinander verschiedene Umdrehungs- und Kippvorgänge mit Wartezeiten dazwischen durchzuführen, um das vollständige Entleeren der Ölemulsion, die in den inneren Komponenten zurückgeblieben waren, ein langes und kostspieliges manuelles Verfahren, das sich für industrielle Verarbeitung schlecht eignet.

Diese Nachteile und Unannehmlichkeiten können dank dem neuen erfindungsgemässen Verfahren ausgeschaltet werden, das erlaubt, die noch im Kompressor vorhandene Ölemulsion zurückzu- gewinnen und die verschiedenen im Kompressor enthaltenen Materialien herauszuholen, wie dies im kennzeichnenden Teil des Anspruchs 1 beansprucht wird.

Das hauptsächliche Kennzeichen ist, dass der Kopfteil der Umhüllung des Kompressors abgetrennt und vom untern Teil der Umhüllung weggenommen wird. Dank dieser Operation, die im Rahmen der Zielsetzung der vorlegenden Erfindung neu ist, gelingt es, die Gefahr der von der Ölemulsion, dem CFC und dem HCFC ausgehenden Emissionen vollständig auszuschalten, und die metallischen Materialien ohne Qualitätseinbussen zurückzugewinnen und zu trennen, wodurch eine beachtliche wirtschaftlich Einsparung erreicht wird, dank der Tatsache, dass es nicht mehr erforderlich ist, spezielle Einrichtungen zu verwenden, um die im Kompressor enthaltenen Metalle zu trennen.

Die vorliegende Erfindung wird im Folgenden in ihren Einzelheiten unter Bezugnahme auf ein Ausführungsbeispiel beschrieben, das mit schematischen Abbildungen die einzelnen Phasen des Arbeitsprozesses zeigt. Die Abbildungen zeigen in den Figuren:
1 bis 7 in rein schematischer Art die verschiedenen Arbeitsphasen, die das erfindungsgemässe Verfahren sowie die entsprechenden Einrichtungen zu dessen Durchführung;
8 im Sinn eines Beispiels eines aufgetrennten eines herkömmlichen hermetisch gekapselten Alternativ-Kompressors, wie er in der Praxis verwendet wird, um die grosse Komplexität des Inhalts zu zeigen und um die Problematik des Rezyklierens der einzelnen Komponenten besser zu erläutern.

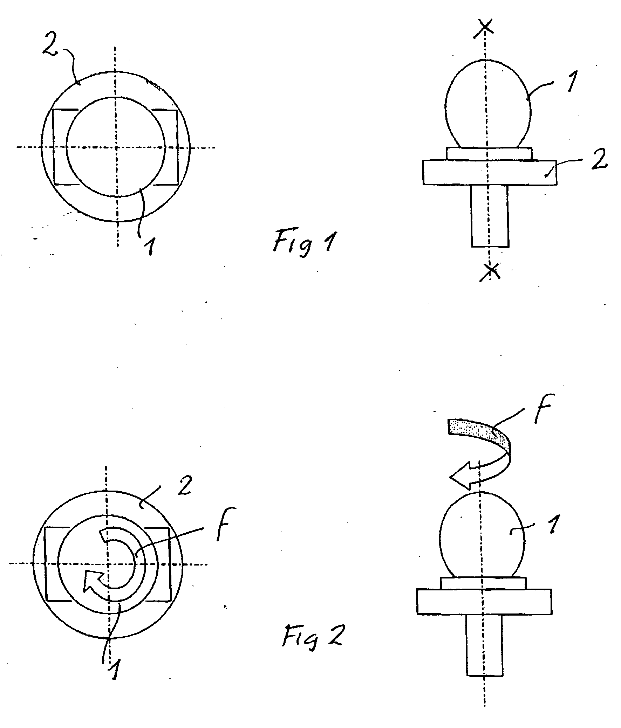

In den Einzelheiten stellen die Figuren 1 bis 4 die Einrichtungen im Grundriss und im Aufriss dar und zeigen in der:
Fig. 1 das Beefestigen des Kompressors 1 auf einem Drehteller 2, in solcher Weise, dass die Achse des Kompressors 1 genau mit der Drehachse x-x des Drehtellers 3 übereinstimmt. Der Drehteller 2 ist mit Vorrichtungen (nicht dargestellt) zum Zentrieren und zum Einspannen des Kompressors 1 versehen, damit der Kompressor 1 fest auf dem Drehteller 2 sitzt und genau zentriert auf diesem mitrotieren kann. Genaues Zentrieren des Kompressors 1 auf dem Drehtisch 2 ist wesentlich, damit ein sauberes Abtrennen des Deckels oder Kopfteils des Kompressors 1 erreicht wird, was den heikelsten und wichtigsten Arbeitsschritt des ganzen erfindungsgemässen Verfahrens bildet.

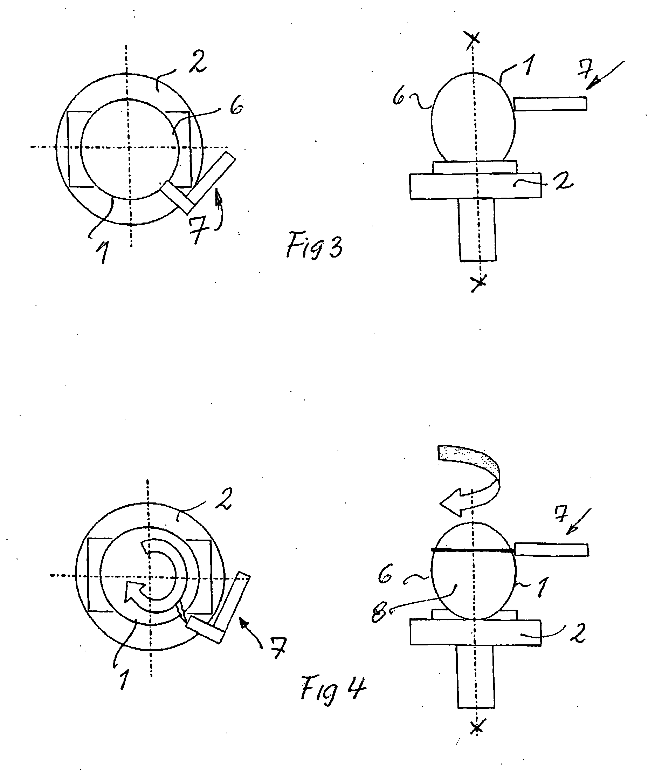

Der Pfeil f deutet die Drehung des Drehtellers 2 mit dem Kompressor 1 an, die in beliebiger Richtung erfolgen kann. In den Figuren 3 und 4 ist die Operation dargestellt, die das Verfahren kennzeichnet, nämlich das Abtrennen des Kopfteils oder Deckels der Umhüllung des Kompressors 1.

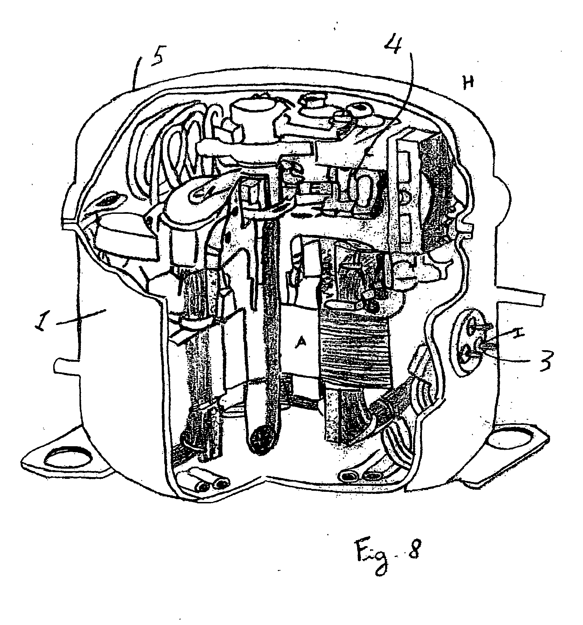

Aus der Fig. 8, in der ein Beispiel des Aufbaus eines hermetisch gekapselten Alternativ-Kompressors dargestellt ist, wird ersichtlich, wie innerhalb der Umhüllung 1 der Elektromotor 3 mit dem Alternativ-Kompressor 4 und den übrigen erforderlichen Einrichtungen verbunden sein kann, die aus verschiedenen Materialien bestehen, die zu rezyklieren sind. Auch gezeigt ist, wie der Kopfteil 5 des Kompressors auf den Unterteil der Umhüllung gelötet ist, so dass der Kompressor dicht gekapselt ist und ohne Auftrennen der Umhüllung nicht geöffnet werden kann. Die Fig. 8 ist als blosses Beispiel für den Aufbau eines hermetisch gekapselten Alternativ-Kompressors zu betrachten, der in den Einzelheiten je nach der Herstellerfirma beträchtlich variieren kann, jedoch grundsätzlich immer die gleichen Elemente umfasst. Die vorliegende Erfindung kann mit allen heute aus der Praxis bekannten Typen hermetisch gekapselter Alternativ-Kompressoren angewendet werden. Was ändern kann, ist nur die letzte gemäss dem Verfahren vorgesehene Arbeitsphase, nämlich das Trennen der Metalle, das gemäss der vorliegenden Erfindung und in Abhängigkeit von einer ganzen Reihe von spezifischen Parametern (Aufbau des Kompressors, Seriengrösse der zu rezyklierenden Kompressoren, Wirtschaftlichkeit der Operation, usw.) sowohl manuell als auch mittels eines Manipulationsroboters vorgenommen werden kann.

Die Fig. 3 zeigt schematisch die Arbeitsphase des Ausrichten des Umfangs (bzw. längs des Umfangs) am Kopfteil 5 der Umhüllung des Kompressors 1 auf ein Abtrennorgan 7 für die Umhüllung 6.

Das Abtrennorgan 7 ist in den Figuren 3 und 4 sehr schematisch dargestellt, dieses kann entsprechend den besonderen Bedingungen für die Ausführung des Verfahrens erfindungsgemäss verschiedene Formen annehmen. Dieses kann beispielsweise gemäss einer ersten bevorzugten Ausführungsform und unter Anwendung einfacher und erprobten Technik als mechanisch arbeitendes Abtrennorgan in Form eines Fräsers oder einer rotierenden Schleifscheibe vorgesehen werden, kann aber auch gemäss anderen vorgesehenen bevorzugten Lösungen als Plasma-Schweissbrenner oder als Laserstrahl-Brenner ausgebildet sein. Die Wahl des Abtrennsystems hängt von verschiedenen Faktoren ab, wie beispielsweise der Verfügbarkeit einer der Techniken, dem Umfang der zu bearbeitenden Kompressorreihen, der erforderlichen Genauigkeit des Abtrennschnittes - welcher ohne Beschädigung der Vorrichtungen im Innern des Kompressors erfolgen muss - und der Wirtschaftlichkeit der ganzen Operation, usw. Daher bleibt dem Fachmann auf dem Gebiet die Aufgabe überlassen, den Typ des Abtrennorgans 7 auszuwählen, der den Bedürfnissen am besten entspricht.

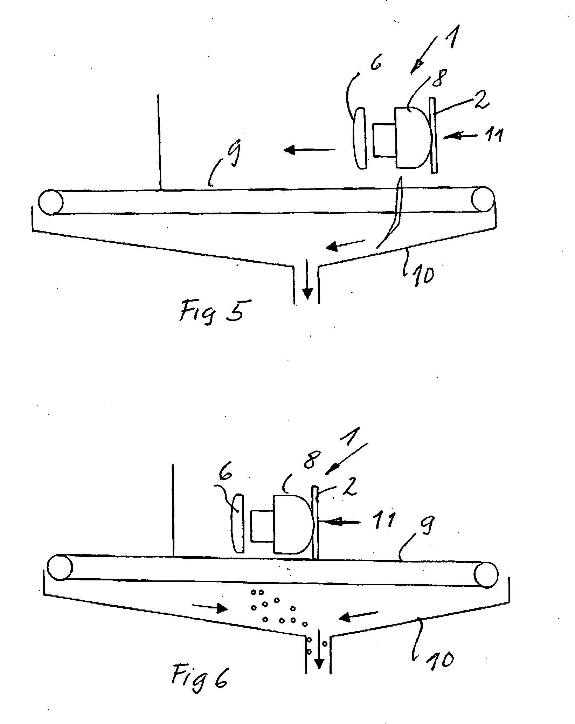

Die anschliessende Arbeitsphase ist sodann wiederum schematisch in den Figuren 5 und 6 dargestellt, welche das Kippen des Unterteils 8 der Umhüllung 6 um mindestens 90° und das vollständige Entleeren der im Kompressor 1 enthaltenen Flüssigkeit zeigen, die aufgefangen und in geeigneter Weise entfernt wird, beispielsweise, wie dies in den Ansprüchen 8 und 9 vorgesehen ist, die sich auf ein Auffangsystem beziehen, das sich zur Realisierung des erfindungsgemässen Verfahrens ideal eignet, mittels eines Transportbandes 9, das für die Flüssigkeit durchlässig ist, unter welchem ein Auffanggefäss 10 angeordnet ist.

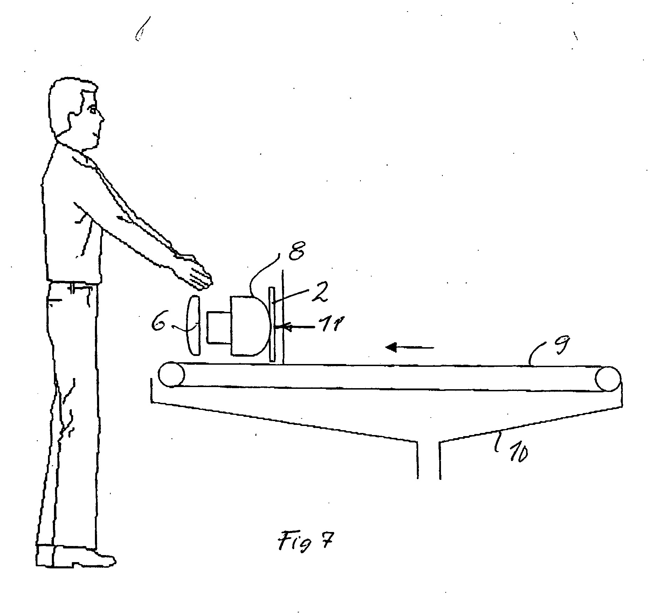

Sowohl die Einrichtung zum Kippen des Unterteils 8 als auch die Vorrichtung zum Ausbauen des Motors 3 des Kompressors 1 nach dem Aufschneiden der Umhüllung 6 und dem Entfernen der abgetrennten Teile auf einem Transportband 9 werden in den Figuren nicht in den Einzelheiten gezeigt, weil es sich um Vorrichtungen handelt, die jeder Fachmann auf dem Gebiet in verschiedener Art und Weise realisieren kann. Dabei handelt es sich jedoch um Operationen, die je nach den Erfordernissen und Bedingungen bei der Durchführung des erfindungsgemässen Verfahrens von Hand ausgeführt werden können oder mehr oder weniger automatisiert mit Hilfe eines Manipulationsroboters. Auch die letzte Arbeitsphase des erfindungsgemässen Verfahrens, nämlich das Trennen der Metalle der abgelösten Teile kann, wie in der Fig. 7 gezeigt, am Ende des Transportbandes 9 von Hand mit direktem Eingreifen einer Bedienungsperson erfolgen, oder automatisch mit Hilfe eines geeigneten Manipulationsroboters und Auswahl entsprechend den Realisierungsbedingungen für das erfindungsgemässe Verfahren. Wichtig ist dabei nur, dass nach dem Abtransport der vom Kompressor 1 abgetrennten Teile ein genaues Aussortieren der verschiedenen im Kompressor 1 enthaltenen Materialien erfolgt, welche Materialien nachher an die geeigneten Wiederaufbereitungsbetriebe weitergegeben werden.

Bezüglich der Vorrichtung zur Durchführung des erfindungsgemässen Verfahrens ist klar, dass diese einen Drehteller 2 aufweisen muss, auf welchem die Kompressoreinheit 1 koaxial mit einem Abtrennorgan 7 für die Umhüllung 6 platziert, welches erfindungsgemäss beispielsweise die in den Ansprüchen betreffend das Verfahren 2, 3, 4 oder 5 vorgesehenen Formen annehmen kann, und ein Kipp-System (angedeutet mit 11 in den Figuren 5, 6 und 7) mittels welchem die Rotationsachse x-x des Drehtellers 2 um mindestens 90° geschwenkt bzw. gekippt werden kann, nämlich aus der vertikalen Stellung in eine mindestens horizontale oder nach unten geneigte Lage gebracht werden kann, und ein Aufnahmesystem 10 sowie ein Transportband 9, auf welchem die darauf abgelegten abgetrennten Teile zu einer Station gebracht werden, wo die verschiedenen Materialien aussortiert werden.

Alle die genannten Vorrichtungen können in der praktischen Anwendung sehr verschieden ausgebildet sein und können vom Faschmann auf dem Gebiet frei gewählt werden. Festzuhalten ist einzig, dass das System zum Auffangen 10 der in der Kompressoreinheit 1 vorhandenen Flüssigkeit, welche aus dem Unterteil 8 der aufgetrennten Umhüllung 6 austritt, wenn dieses um mindestens 90° gekippt wird, gemäss einer bevorzugten Ausführungsform des erfindungsgemässen Systems aus einem für die Flüssigkeit durchlässigen - also beispielsweise mit geeigneten Öffnungen versehenen - Förderband 9 besteht, unter welchem ein Auffanggefäss 10 für die Flüssigkeit vorgesehen ist. Auch dafür sind andere ebenso brauchbare Lösungen denkbar, die somit ebenfalls Teil des erfindungsgemässen Konzeptes sind.

In Analogie zum oben Erwähnten kann am Ende des Transportbandes 9 das Aussortieren der Materialen der abgetrennten Teile von Hand ausgeführt werden, wie dies in der Fig. 7 gezeigt ist, oder mehr oder weniger automatisch mit Hilfe eines geeigneten Bestimmungs- und/oder Manipulations-Roboters

Die Vorteile des Arbeitsablaufs auf der erfindungsgemässen Vorrichtung, die auf dem genauen Auftrennen der Umhüllung 6 der Kompressoreinheit 1 und dem Kippen ihres Unterteils beruht, sind über das vollständige Entfernen der noch in der Kompressoreinheit 1 befindlichen öligen Flüssigkeit, des CFC und des HCFC hinaus die Möglichkeit, die Materialien, aus denen die Kompressoreinheit 1 besteht, vollständig und sauber, also ökologisch verträglich zurückzugewinnen. Ferner ist die grosse Flexibilität der Anwendung der erfindungsgemässen Vorrichtung nennen, die sich dafür eignet, verschiedene Typen von Kompressoreinheiten 1 ohne aufwändige Modifikationen zu rezyklieren.

### Liste der in den Figuren verwendeten Bezugsziffern

- 1: Kompressoreinheit
- 2: Drehteller
- 3: Elektromotor
- 4: Alternativ-Kompressor
- 5: Kopfteil der Kompressoreinheit
- 6: Umhüllung der Kompressoreinheit
- 7: Abtrennorgan
- 8: Unterteil der Umhüllung
- 9: Transportband
- 10: Auffang- und Sammelgefäss
- 11: Kippvorrichtung

## Patentansprüche

1. Verfahren zum Rezyklieren von hermetisch gekapselten Alternativ-Kompressoreinheiten von Kühlschränken kleiner und mittlerer Leistung, **gekennzeichnet durch** die folgenden Arbeitsphasen:
1) Befestigen der Kompressoreinheit (1) auf einem Drehteller (2), wobei die Achse des Kompressors mit der Rotationsachse (x-x) des Drehtellers 2 zusammenfällt,
2) Rotation des Drehtellers (2) mit der Kompressoreinheit (1) um die Rotationsachse (x-x) des Drehtellers 2,
3) Ausrichten eines Abtrennorgans (7) für die Umhüllung (6) auf den Kopfteil (5) der Umhüllung (6) Kompressoreinheit (1),
4) Abtrennen des Kopfteils (5) der Umhüllung (6) der Kompressoreinheit (1) und dessen Entfernung vom Unterteil (8) der Umhüllung (6),
5) Kippen des Unterteils (8) der Umhüllung (6) der Kompressoreinheit (1) um mindestens 90° und vollständige Entleerung der in der Kompressoreinheit (1) vorhandenen Flüssigkeit daraus,
6) Auffangen der aus der Kompressoreinheit (1) ausgetretenen Flüssigkeit,
7) Ausbauen des Motors (3) der Kompressoreinheit (1) nach dem Aufschneiden der Umhüllung (6) und Entfernen der abgetrennten Teile auf dem Transportband (9),
8) Aussortieren der Metalle der abgetrennten Teile und Sammeln der einzelnen Materialien, die die Kompressoreinheit (1) bildeten,

2. Verfahren zum Rezyklieren der Kompressoreinheiten gemäss dem Anspruch 1,
**dadurch gekennzeichnet, dass**
das Abtrennorgan (7) mechanisch arbeitet und als Fräser oder als (Trenn-) Schleifscheibe ausgebildet ist,

3. Verfahren zum Rezyklieren der Kompressoreinheiten gemäss dem Anspruch 1,
**dadurch gekennzeichnet, dass**
das Abtrennorgan (7) nach dem Prinzip eines Plasma-Schweissbrenners arbeitet,

4. Verfahren zum Rezyklieren der Kompressoreinheiten gemäss dem Anspruch 1,
**dadurch gekennzeichnet, dass**
das Abtrennorgan (7) nach dem Prinzip eines Laserstrahl-Brenners arbeitet,

5. Verfahren zum Rezyklieren der Kompressoreinheiten gemäss dem Anspruch 1,
**dadurch gekennzeichnet, dass**
das Ausbauen des Motors (3) der Kompressoreinheit (1) und das Entfernen der abgetrennten Teile auf dem Transportband (9), vorgesehen als Arbeitsphase 7, von Hand (manuell) ausgeführt wird,

6. Verfahren zum Rezyklieren der Kompressoreinheiten gemäss dem Anspruch 1,
**dadurch gekennzeichnet, dass**
das Ausbauen des Motors (3) der Kompressoreinheit (1) und das Entfernen der abgetrennten Teile auf dem Transportband (9), vorgesehen als Arbeitsphase 7, mit Hilfe eines Manipulationsroboters ausgeführt wird,

7. Verfahren zum Rezyklieren der Kompressoreinheiten gemäss dem Anspruch 1,
**dadurch gekennzeichnet, dass**
das Aussortieren der Materialien der abgetrennten Teile und das Sammeln der einzelnen Materialien, die die Kompressoreinheit (1) bildeten von Hand (manuell) ausgeführt werden,

8. Verfahren zum Rezyklieren der Kompressoreinheiten gemäss dem Anspruch 1,
**dadurch gekennzeichnet, dass**
das Aussortieren der Materialien der abgetrennten Teile und das Sammeln der einzelnen Materialien, die die Kompressoreinheit (1) bildeten, gemäss der Arbeitsphase 8 des Anspruchs 1 mit Hilfe eines oder mehrerer Bestimmungs- und Manipulationsroboter ausgeführt werden,

9. Vorrichtung zum Durchführen des Verfahrens zum Rezyklieren der hermetisch gekapselten Alternativ-Kompressoren aus Kühlschränken kleiner oder mittlerer Leistung gemäss dem Anspruch 1,
**dadurch gekennzeichnet, dass**
diese die folgenden Elemente umfasst:
a) einen Drehteller (2), auf welchem die Kompressoreinheit (1) koaxial befestigt wird,
b) ein Abtrennorgan (7) für die Umhüllung (6) der Kompressoreinheit (1), ausgebildet als Fräser oder Trenn-Schleifscheibe oder als Plasma-Brenner oder als Laserstrahl-Brenner,
c) eine Kippvorrichtung (11) zum Kippen des Unterteils der aufgetrennten Umhüllung (6) um mindestens 90°,
d) eine Einrichtung (10) zum Auffangen und Wiedergewinnen der in der Kompressoreinheit (1) noch vorhandenen Flüssigkeit,
e) ein Transportband (9) zum Abtransportieren der abgetrennten Teile.

10. Vorrichtung zum Durchführen des Verfahrens zum Rezyklieren der Kompressoreinheiten gemäss dem Anspruch 9,
**dadurch gekennzeichnet, dass**
die Einrichtung (10) zum Auffangen und Wiedergewinnen der in der Kompressoreinheit (1) noch vorhandenen Flüssigkeit durch das Transportband (9) gebildet wird, welches für die Flüssigkeit durchlässig ist sowie durch einen Flüssigkeitsbehälter (10), der unter dem Transportband (9) vorgesehen ist.

## Claims

1. Method for recycling hermetically encapsulated alternative compressor units of refrigerators of low and medium power, **characterized by** the following-steps:
1) fixing the compressor unit (1) on a turntable (2), wherein the axis of the compressor coincides with the rotation axis (x-x) of the turntable (2),
2) rotating the turntable (2) with the compressor unit (1) around the rotation axis (x-x) of the turntable 2,
3) aligning a severing element (7) for casing (6) on head portion (5) of the casing (6) of the compressor unit (1),
4) separating the head portion (5) of the casing (6) of the compressor unit (1) and removing the same from the lower portion (8) of the casing (6),
5) tilting the lower part (8) of the casing (6) of the compressor unit (1) by at least 90° and completely removing the liquid contained in the compressor unit (1),
6) collecting the liquid leaked from the compressor unit (1),
7) disassembling of the motor (3) of the compressor unit (1) after cutting the casing (6) and removing the separated components on conveyor belt (9),
8) sorting out of metals of separated components and collecting the individual materials, which formed the compressor unit (1).

2. A method for recycling compressor units according to claim 1,
**characterized in that**
the severing element (7) is a mechanical operator and is composed of a milling or grinding (cutting) machine.

3. A method for recycling compressor units according to claim 1,
**characterized in that**
the severing element (7) operates according to the principle of a plasma welding burner.

4. A method for recycling compressor units according to claim 1,
**characterized in that**
the severing element (7) operates according to the principle of a laser beam burner.

5. A method for recycling compressor units according to claim 1,
**characterized in that**
the disassembling of the motor (3) of the compressor unit (1) and the removal of separated components onto the conveyor belt (9), provided as operating phase 7, are executed by hand (manually).

6. A method for recycling compressor units according to claim 1,
**characterized in that**
the disassembling of the motor (3) of the compressor unit (1) and the removal of separated components onto the conveyor belt (9), provided as operating phase 7, is executed by means of a manipulation robot.

7. A method-for recycling compressor units according to claim 1,
**characterized in that**
the sorting out of materials of separated components and the collecting of individual materials, which formed the compressor units (1), are executed by hand (manually).

8. A method for recycling compressor units according to claim 1,
**characterized in that**
the sorting out of materials of separated components and the collecting of individual materials, which formed the compressor units (1), are executed according to operating phase 8 of claim 1 by means of one or a plurality of measuring and manipulation robots.

9. Device for performing the method for recycling the hermetically encapsulated alternative compressors from refrigerators of low and medium power according to claim 1,
**characterized in that**
the device comprises the following elements:
a) a turntable (2), on which the compressor unit (1) is coaxially fixed,
b) a severing element (7) for the casing (6) of the compressor unit (1), provided with a milling or grinding cutter machine or a plasma burner cutter or a laser burner cutter,
c) a tilting device (11) for tilting the lower portion of the separated casing (6) by at least 90°,
d) a device (10) for collecting and recycling the liquid still present in the compressor unit (1),
e) a conveyor belt (9) for transporting away the separated components.

10. Device for performing the method for recycling the compressor units according to claim 9,
**characterized in that**
the device (10) is provided for collecting and recycling the liquid still present in the compressor unit (1) through the conveyor belt (9), which is permeable to the liquid and through a liquid container (10) which is provided underneath the conveyor belt (9).

## Revendications

1. Procédé de recyclage de compresseurs alternatifs encapsulés hermétiquement de réfrigérateurs de petite et moyenne puissance,
**caractérisé par** les phases de travail suivantes :
1) fixation du compresseur (1) sur un plateau tournant (2), l'axe du compresseur coïncidant avec l'axe de rotation (x-x) du plateau tournant 2,
2) rotation du plateau tournant (2) avec le compresseur (1) autour de l'axe de rotation (x-x) du plateau tournant 2,
3) alignement d'un organe de séparation (7) pour l'enveloppe (6) sur la partie de tête (5) de l'enveloppe (6) du compresseur (1),
4) séparation de la partie de tête (5) de l'enveloppe (6) du compresseur (1) et enlèvement de celle-ci de la partie inférieure (8) de l'enveloppe (6),
5) basculement de la partie inférieure (8) de l'enveloppe (6) du compresseur (1) d'au moins 90° et vidange complète du liquide présent dans le compresseur (1),
6) collecte du liquide déversé du compresseur (1),
7) démontage du moteur (3) du compresseur (1) après découpage de l'enveloppe (6) et enlèvement des pièces séparées sur la bande de transport (9),
8) tri des métaux des pièces séparées et collecte des différents matériaux qui formaient le compresseur (1).

2. Procédé de recyclage de compresseurs selon la revendication 1,
**caractérisé en ce que**
l'organe de séparation (7) fonctionne mécaniquement et est réalisé sous la forme d'une fraise ou d'une meule (à tronçonner).

3. Procédé de recyclage de compresseurs selon la revendication 1,
**caractérisé en ce que**
l'organe de séparation (7) fonctionne selon le principe d'une torche de soudage à plasma.

4. Procédé de recyclage de compresseurs selon la revendication 1,
**caractérisé en ce que**
l'organe de séparation (7) fonctionne selon le principe d'une torche à faisceau laser.

5. Procédé de recyclage de compresseurs selon la revendication 1,
**caractérisé en ce que**
le démontage du moteur (3) du compresseur (1) et l'enlèvement des pièces séparées sur la bande de transport (9), prévus comme phase de travail 7, sont effectués à la main (manuellement).

6. Procédé de recyclage de compresseurs selon la revendication 1,
**caractérisé en ce que**
le démontage du moteur (3) du compresseur (1) et l'enlèvement des pièces séparées sur la bande de transport (9), prévus comme phase de travail 7, sont effectués à l'aide d'un robot de manipulation.

7. Procédé de recyclage de compresseurs selon la revendication 1,
**caractérisé en ce que**
le tri des matériaux des pièces séparées et la collecte des différents matériaux qui formaient le compresseur (1) sont effectués à la main (manuellement).

8. Procédé de recyclage de compresseurs selon la revendication 1,
**caractérisé en ce que**
le tri des matériaux des pièces séparées et la collecte des différents matériaux qui formaient le compresseur (1), selon la phase de travail 8 de la revendication 1, sont effectués à l'aide d'un ou plusieurs robot(s) de détermination et de manipulation.

9. Dispositif pour exécuter le procédé de recyclage de compresseurs alternatifs encapsulés hermétiquement de réfrigérateurs de petite et moyenne puissance selon la revendication 1,
**caractérisé en ce que**
celui-ci comprend les éléments suivants :
a) un plateau tournant (2) sur lequel le compresseur (1) est fixé coaxialement,
b) un organe de séparation (7) pour l'enveloppe (6) du compresseur (1), réalisé sous la forme d'une fraise, d'une meule à tronçonner, d'une torche à plasma ou d'une torche à faisceau laser,
c) un dispositif de basculement (11) pour basculer d'au moins 90° la partie inférieure de l'enveloppe (6) découpée,
d) un moyen (10) pour collecter et récupérer le liquide encore présent dans le compresseur (1),
e) une bande de transport (9) pour évacuer les pièces séparées.

10. Dispositif pour exécuter le procédé de recyclage de compresseurs selon la revendication 9,
**caractérisé en ce que**
le moyen (10) pour collecter et récupérer le liquide encore présent dans le compresseur (1) est formé par la bande de transport (9), laquelle est perméable au liquide, ainsi que par un réservoir de liquide (10) qui est prévu sous la bande de transport (9).
